Europäisches Patentamt

European Patent Office

Office européen des brevets

(11) Numéro de publication: **0 248 750**
**A1**

## (12) DEMANDE DE BREVET EUROPEEN

(21) Numéro de dépôt: **87440019.5**

(22) Date de dépôt: **30.03.87**

(51) Int. Cl.⁴: **B 32 B 27/10**
**C 09 J 3/00, B 65 D 65/40**

(30) Priorité: **10.04.86 FR 8605397**
**06.03.87 FR 8703507**

(43) Date de publication de la demande:
**09.12.87 Bulletin 87/50**

(84) Etats contractants désignés:
**AT BE CH DE ES GB GR IT LI LU NL SE**

(71) Demandeur: **S.A. PAPETERIES R. &P. BLANQUART**
**Zone Industrielle**
**F-59113 Seclin (Nord) (FR)**

(72) Inventeur: **Blanquart, Philippe**
**47 rue du Marais**
**F-59152 Tressin (FR)**

(74) Mandataire: **Lepage, Jean-Pierre**
**Cabinet Lepage & Aubertin Innovations et Prestations**
**23/25, rue Nicolas Leblanc B.P. 1069**
**F-59011 Lille Cédex 1 (Nord) (FR)**

(54) **Complexe coloré.**

(57) L'invention est relative à un complexe coloré. Elle trouvera notamment son application dans le domaine de l'imprimerie pour la réalisation de feuilles de papier couleur ou de bobines, de papiers peints, de papiers d'emballage, .....

Le complexe coloré (1), est composé d'au moins deux couches (2, 3), la première couche (3) formant le verso du complexe (1), étant constituée d'une feuille support, la deuxième couche (2) formant le recto du complexe, étant constituée par un film plastifié, les dites deux couches (2, 3) étant solidarisées par l'intermédiaire de colle (4) à deux composants, à base de résine époxy contenant un solvant, un durcisseur.

Selon l'invention, la colle est colorée par adjonction d'encre soluble dans le solvant de la colle qui peut être par exemple de l'acétate d'isopropyle ou du méthy étylcétone.

En outre, selon un mode de réalisation de l'invention, le complexe coloré comporte une troisième couche intermédiaire (5) perméable, disposée entre le recto (2) et le verso (3) du dit complexe (1) et constituée par une armature synthétique tramée.

FIG. 3

EP 0 248 750 A1

## Description

L'invention est relative à un complexe coloré. Elle trouvera notamment son application dans le domaine de l'imprimerie pour la réalisation de feuilles de papier couleur ou de bobines, la fabrication de papiers peints, ou de papiers d'emballage.

Toutefois, l'utilisation du complexe coloré de la présente invention pourrait être notamment également utilisé tant pour la fabrication de couvertures de livres que dans le domaine de la confection de certains vêtements, de calicots de signalisation, banderoles ou similaires. En effet, les utilisations de substrats colorés sont nombreuses de même que leurs réalisations.

Différentes techniques sont utilisées pour colorer des feuilles de papier : notamment il est possible d'imprimer le papier selon la teinte à obtenir. Cette solution est onéreuse étant donné qu'il est nécessaire d'utiliser un papier disposant des qualités nécessaires pour être imprimé, c'est-à-dire qu'il doit avoir un couchage et un grammage particulier, surtout si l'on désire obtenir un aplat parfait.

Pour éviter l'utilisation de support de qualité, les fabricants s'orientent vers une autre technique connue qui consiste à réaliser un complexe formé d'un film plastifié collé sur un support papier traditionnel. Les avantages de cette structure sont multiples en particulier : le complexe est étanche, à l'abri de l'humidité extérieure, résistant, et présente une qualité esthétique appréciable car il est difficilement froissable et son recto est brillant.

Afin d'obtenir la coloration de tels complexes, il est connu de réaliser la coloration en saupoudrant de pigments colorés l'enduction de colle ou en mélangeant ces pigments à la colle, le film plastifié étant alors choisi transparent pour laisser ressortir la couleur.

Malheureusement, différents inconvénients sont liés à l'utilisation de pigments colorés en suspension dans la colle. En particulier, les pigments employés sont généralement de granulométrie importante ce qui ne permet pas d'obtenir une grande finesse de la teinte.

De plus, pour l'obtention de coloris vifs, une quantité importante de pigments doit être mise en jeu, ce qui a pour conséquence de faire perdre à la colle son pouvoir d'adhérence.

Ainsi, cette technique présente de nombreuses contraintes et en particulier le nombre de couleurs pouvant être reproduites est très limité. Les coloris vifs doivent être bannis et actuellement les seules couleurs pouvant être obtenues sont le rouge très foncé, le brun très foncé, le bleu très foncé et le noir.

Aucune teinte spéciale ne peut être obtenue directement. En cas de demande particulière, il est nécessaire de procéder à l'impression du support selon la teinte à obtenir et de coller le film plastifié dans une opération de reprise, ce qui grève singulièrement le coût de revient du produit.

Outre cette limitation dans les teintes, l'utilisation de pigments colorés n'est pas simple de mise en oeuvre étant donné que des préparatifs importants doivent être réalisés. Les pigments sont incorporés dans la colle et l'ensemble doit être brassé à l'aide d'un agitateur ou d'une hélice pour obtenir l'homogénéité du mélange parfaite.

De plus, le mélange obtenue doit être utilisé rapidement sans interruption à moins de prendre des précautions particulières lors de la reprise telle qu'un nouveau brassage.

Ces différentes contraintes ont jusqu'à présent largement freiné le développement de la production de complexes colorés au profit des papiers teintés par impression.

Les teintes obtenues par utilisation de pigments en suspension de la colle sont instables dans le temps et ne conviennent par conséquent pas à certains types d'applications. De nombreux contrôles sont nécessaires durant la fixation du film plastifié sur le support papier à l'aide de colle chargée de couleurs ce qui oblige à employer un personnel très qualifié pour cette tâche.

Dans le domaine des papiers peints, d'autres problèmes techniques apparaissent: il s'agit par exemple d'obtenir une gamme de couleurs très étendue permettant l'harmonisation parfaite des peintures et du papier peint ou encore de ce dernier aux tentures.

Un autre problème spécifique du papier peint réside dans sa faculté d'absorption de l'humidité et dans la qualité de son adhérence sur le support à recouvrir.

Le but de la présente invention est de présenter un complexe coloré qui offre les différents avantages de l'utilisation d'un revêtement plastifié et qui en outre peut prendre toutes les teintes souhaitées, y compris les couleurs vives.

Les avantages de la présente invention sont donc énormes puisqu'il est possible de réaliser un complexe coloré en une seule opération, sans limitation de teintes avec un emploi de papier de qualité ordinaire.

Le prix du produit est particulièrement économique tout en offrant une excellente qualité notamment une parfaite régularité et stabilité de la teinte dans le temps.

La fabrication ne requiert aucune surveillance particulière et elle peut être réalisée sur des machines traditionnelles. Des arrêts même prolongés de machines ne présentent aucune gêne et la reproduction des couleurs se fait sans difficulté.

Les propriétés d'adhérence de la colle ne sont pas altérées d'où une parfaite tenue du film plastifié sur le support papier.

Conjointement à l'abaissement du coût de revient, la présente invention permet d'élargir le champ d'application des complexes colorés aux différentes teintes souhaitées.

2

Un des buts de la présente invention est de proposer un complexe coloré décoratif qui trouvera notamment son application dans le domaine du papier peint et qui permettra de répondre aux différents critères spécifiques précités.

Un but de la présente invention est de proposer un complexe coloré décoratif qui constituera un papier peint coloré avec une palette de couleurs infinie autorisant son adaptation à tout type de décoration. De plus, le papier peint ainsi constitué sera lavable, indéchirable et d'aspect esthétique très agréable.

En outre, le papier peint ainsi constitué aura un pouvoir d'absorption de l'humidité important et son accrochage sur le support sera renforcé de par la structure du complexe utilisé.

Un autre but de la présente invention est de proposer un complexe coloré décoratif qui, grâce aux avantages conférés par sa structure spécifique, permettra son utilisation pour l'emballage, la protection de produits, et également pour la réalisation de certains vêtements ou de banderoles ou calicots de signalisation.

D'autres buts et avantages de la présente invention apparaitront au cours de la description qui va suivre qui n'est cependant donnée qu'à titre indicatif et qui n'a pas pour but de la limiter.

Selon la présente invention, le complexe coloré, trouvera notamment son application dans le domaine de l'imprimerie pour former une feuille de papier ou similaire de couleur, composée d'au moins deux couches, la première couche, formant le verso du complexe, étant constituée d'une feuille support, la deuxième couche, formant le recto du complexe, étant constituée par un film plastifié transparent imperméable, les dites deux couches étant solidarisées par l'intermédiaire de colle à deux composants, à base de résine époxy contenant un solvant, un durcisseur, est caractérisé par le fait que la colle est colorée par adjonction d'encre soluble dans le solvant de la colle.

Selon une autre caractéristique de la présente invention, le complexe coloré décoratif, qui trouvera notamment son application dans le domaine des papiers peints, l'une des deux couches du complexe étant encollée par une enduction de colle colorée selon l'invention, est caractérisé par le fait qu'il comporte une troisième couche intermédiaire perméable, disposée entre le recto et le verso du dit complexe, après la dite enduction de colle colorée, cette dernière assurant l'adhésion des trois couches.

L'invention sera mieux comprise à la lecture de la description suivant accompagnée des dessins en annexe qui en font partie intégrante.

La figure 1 schématise en coupe les différents complexes colorés de la présente invention selon un premier mode de réalisation.

La figure 2 schématise le fonctionnement d'une installation de fabrication d'un complexe coloré selon la réalisation de la figure 1.

La figure 3 schématise une vue en coupe des différents constituants d'un deuxième mode de réalisation de complexes colorés décoratifs selon la présente invention.

La figure 4 illustre schématiquement un type d'installation qui permet la fabrication du complexe tel que représenté à la figure 3.

La présente invention vise un complexe coloré destiné dans le domaine de l'imprimerie à former une feuille de papier couleur. Les applications de ce produit seront multiples en particulier le complexe coloré peut servir dans le domaine de l'imprimerie et à la confection de papiers d'emballage, de papiers peints, de couvertures de livres ou autres, ainsi que dans le domaine de la confection de certains vêtements, de calicots de signalisation, de banderoles ou similaires.

On peut distinguer deux mises en oeuvre pour la réalisation d'une bande de papier continue de couleur.

Tout d'abord, il est possible de déposer la couleur par impression du papier blanc et éventuellement de rendre ce papier brillant par dépôt d'un vernis. Cette technique donne de bons résultats mais est coûteuse dans la mesure où elle nécessite plusieurs passages successifs et qu'elle nécessite un papier de base de qualité pour recevoir l'impression.

La solution plus économique adoptée actuellement consiste à coller un film plastifié transparent sur un support de papier ou cartonné. On utilise à cet effet une colle chargée en pigments qui permettent de teinter le complexe formé.

Les inconvénients de cette technique sont une limitation dans le choix des couleurs et des difficultés de fabrication pour obtenir une stabilité de la teinte dans le temps.

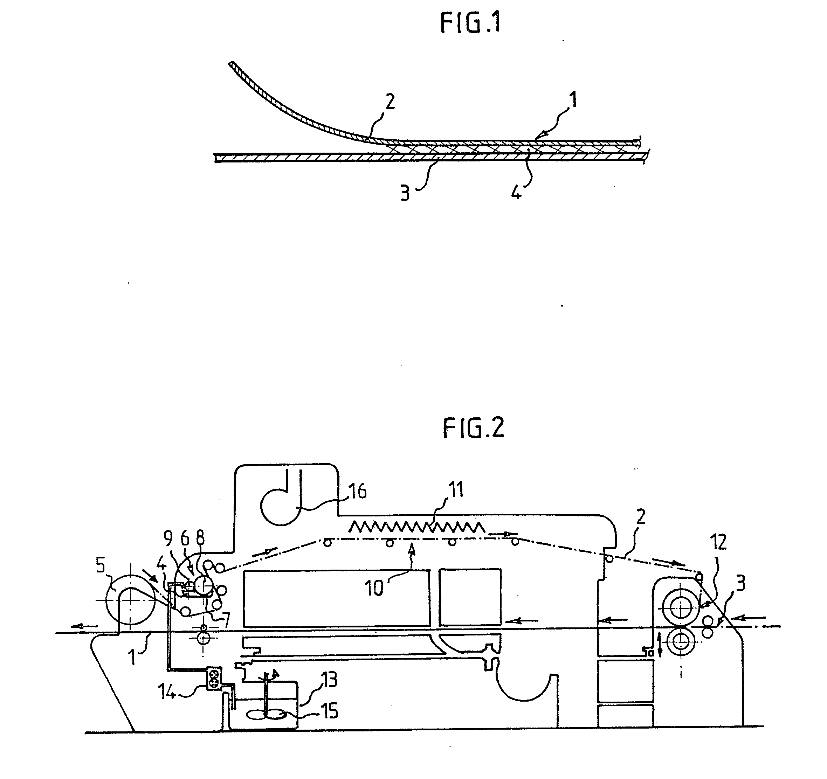

La figure 1 schématise en vue de coupe la structure d'un complexe coloré 1 selon une première mise en oeuvre de la présente invention. Ce complexe coloré est composé au moins d'un film plastifié 2, constituant le recto, fixé sur un support 3 en papier ou en carton, constituant le verso, par une pellicule de colle 4 intermédiaire.

La colle utilisée est de type traditionnel dans ce type d'application c'est-à-dire qu'il s'agit d'une colle à deux composants à base de résine époxy contenant un solvant.

Le film plastifié 2 est transparent et procure un aspect brillant au complexe coloré 1.

Selon l'invention, la colle 4 est colorée ce qui avec le concours de la transparence du film 2 permet de teinter le complexe coloré.

Comme il ressort des exemples suivants, aucune limitation de teinte n'est imposée pour le coloris de la colle 4 et donc même des couleurs vives peuvent être obtenues, sans que les propriétés d'adhérence de la colle soient dénaturées.

Jusqu'à présent, la coloration de la colle était obtenue par chargement de cette dernière en pigments ce qui précisément engendrait des limitations.

Selon la caractéristique principale de la présente invention, la colle est colorée par adjonction d'encres solubles dans le solvant de la colle.

L'encre utilisée pour la coloration du complexe passe donc en solution dans le solvant de la colle ce qui permet d'obtenir un mélange intime au niveau de la colle et de l'encre sans avoir un chargement de la colle avec des particules en solution.

Certaines précautions doivent être prises pour qu'il y ait compatibilité entre la colle, l' encre et le film plastifié.

La colle à deux composants pourra être de type traditionnel c'est-à-dire être confectionnée à partir de résine époxy et d'un durcisseur de type poly-isocyanate dans un rapport 10 à 1.

Ce type de colle utilise à titre de solvant, l'acétate d'isopropyle ou le méthyl éthylcétone.

Le choix de l'encre devra être établi en fonction du type de solvant utilisé et en outre la viscosité de l'encre doit être analogue à la viscosité de la colle. Il est en effet indispensable d'obtenir cet équilibre pour atteindre un équilibre et une grande régularité dans l'application du mélange entre le film plastifié et le support de papier.

D'une façon générale, les propriétés physiques de l'encre et de la colle doivent être identiques pour que toute modification des conditions extérieures ait la même influence sur le mélange qui ainsi conserve son homogénéité en toute circonstance.

Cet équilibre entre les propriétés des encres et colles permet de minimiser l'incidence du brassage sur le mélange. En outre, ce mélange peut ainsi se conserver sans se dénaturer.

La similarité des propriétés physiques permet de s'assurer que le dépôt de colles et encres sur le film plastifié suit les mêmes règles de proportion durant toute la fabrication.

Des essais ont montré que l'utilisation d'acétate d'isopropyle, comme solvant, convenait pour des films de polyéthylène, polypropylène, polyester, acétate de cellulose et PVC.

Par contre, le méthyl éthylcétone convient pour le polypropylène, le polyester et le PVC mais ne convient pas pour l'acétate de cellulose qui se détériore et certains polyesters insuffisamment polymérisés.

Dans le choix des solvants, il est nécessaire de vérifier qui celui-ci ne soit pas réactif vis-à-vis du film plastifié ou des encres. Par exemple, le choix du toluène comme solvant n'est pas satisfaisant car généralement les encres en sa présence perdent de leur couleur.

La figure 2 schématise une installation destinée à la réalisation d'un complexe coloré 1 à partir d'une bande continue de papier ou de carton 3 et d'un film plastifié 2.

Le film plastifié 2 se présente généralement initialement sous la forme d'un rouleau 5. A sa sortie, le film plastifié 2 passe dans une installation d'encollage 6 qui comprend un bac encolleur 7 dans lequel barbote un cylindre 8 en contact avec le film 2. Ce contact permet de déposer une pellicule de colle et d'encre à la surface du film. L'épaisseur de cette pellicule est ajustée au moyen d'un cylindre secondaire 9 dont on peut régler l'écartement par rapport au cylindre lécheur.

A la sortie du poste d'encollage, le film plastifié 2 encollé et teinté passe dans un tunnel de séchage 10 où le solvant s'évapore. Le séchage est par exemple accéléré à l'aide de résistances chauffantes 11 et le solvant est évacué avec l'aide d'un ventilateur d'exhaure 16.

Le film plastifié encollé teinté est ensuite appliqué sur le support de papier 3 grâce à la calandre et au cylindre de contre pression des cylindres calandreurs 12. Etant donné que le solvant s'est évaporé, le collage du film 2 sur le support 3 est immédiat et le complexe est ainsi réalisé.

Le bac encolleur 7 est approvisionné en colle colorée 4 par l'intermédiaire d'un réservoir inférieur 13 dans lequel on réalise le mélange. L'approvisionnement en colle se fait par l'intermédiaire d'une pompe à engrenage 14 par exemple qui est actionnée en permanence.

A titre d'exemple, le mélange se compose de 20 litres de colle, 2 litres de durcisseur, 16 litres de solvant plus les encres.

L'ensemble est mélangé par une hélice 15 entrainée mécaniquement par la machine. Ainsi, le rythme du brassage est directement lié à la vitesse de production de l'installation.

La pression de calandrage est d'environ 1 à 3 tonnes ce qui permet d'obtenir une parfaite adhérence du film sur le support grâce à la calandre 12 constituée par un cylindre chauffant chromé dur.

EXEMPLE No 1: Complexe coloré "Pentome jaune 102 C"

```
- 26,42 kg de colle composée de: 10    kg de colle époxy

                                 1     kg de poly-isocyanate

                                 7,92  kg d'acétate isopropyle

                                 5     kg encre fluide jaune HA37653

                                 2,5   kg décolorant (vernis)
                                       ----------
                                 26,42 kg
```

- Papier couché brillant 1 face 90 g
- 20 g de colle par m² de papier
- Film polypropylène épaisseur 12 μ
- Pression calandre : 1,5 t
- Température calandre : 45 °C

EXEMPLE No 2: Complexe coloré "orange"

```
- 34,3 kg de colle composée de : 20      kg de colle époxy

                                  2      kg de poly-isocyanate

                                  10     kg de diluant

                                  1,65 kg encre fluide jaune HA37653

                                  0,450kg jaune HA35125

                                  0,200kg rouge HA35126

                                  ————

                               34,300kg
```

- Papier couché brillant 1 face 90 g
- 20 g de colle par m² de papier
- Film polypropylène épaisseur : 12 μ
- Pression calandre : 1,5 t
- Température calandre : 45 °C

En mettant en oeuvre la présente invention, on pourra également réaliser un complexe coloré décoratif dont les applications sont multiples dans le domaine du papier peint ou du papier d'emballage ou encore pour la réalisation de vêtements, calicots ou banderoles de signalisation.

Plus spécialement, dans le domaine des papiers peints, l'invention permet d'obtenir un complexe coloré décoratif délivré en continu avec une seule étape principale de fabrication.

En effet, grâce à la mise en oeuvre de la présente invention, on formera le complexe en tant que tel et, en même temps, on obtiendra sa coloration, ce sans aucune limitation de nuances et de coloris.

Ceci va à l'encontre des procédés traditionnels de fabrication qui généralement nécessitaient, après la formation du papier peint support, une reprise en imprimerie pour colorer et décorer ce dernier.

Ainsi, la solution sera plus économique tout en obtenant des résultats, sur le plan esthétique et résistance, égaux et même supérieurs au papier obtenu par la technique traditionnelle.

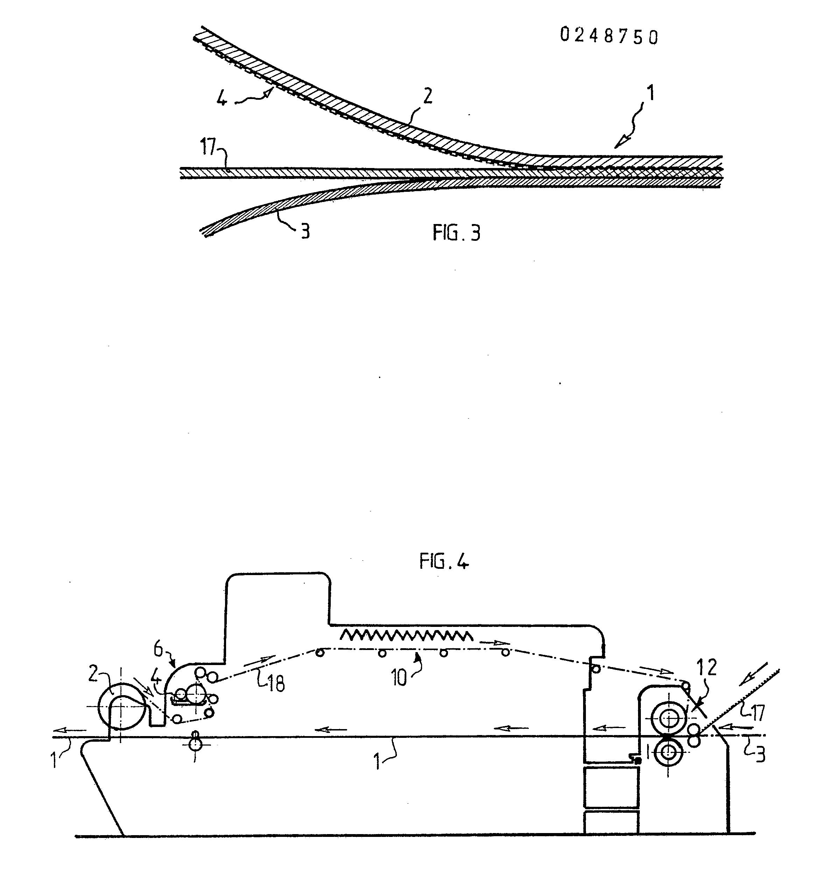

La figure 3 montre schématiquement une vue en coupe d'un complexe coloré décoratif 1 selon une seconde mise en oeuvre de la présente invention.

La base de composition du complexe 1 s'inspire des techniques connues généralement dénommées par techniques de pelliculage.

Ainsi, comme pour le complexe de la figure 1, le complexe 1 est constitué au moins de deux couches 2 et 3, la première couche 3, formant le verso du complexe 1, étant constituée d'une feuille support et, la deuxième couche 2, formant le recto du complexe, étant constituée par un film plastifié transparent imperméable.

En outre, selon la présente invention, le complexe comporte une troisième couche intermédiaire 17, perméable, disposée entre la couche "recto" 2 et la couche "verso" 3.

Pour constituer l'assemblage du complexe 1, l' une des deux couches 2 ou 3 est encollée par une enduction 4 de colle colorée, cette dernière assurant l'adhésion des trois couches 2, 3, 17.

Les différentes phases de la fabrication seront expliquées ultérieurement en regard de la figure 4.

Selon l'invention, la troisième couche intermédiaire 17 se présente sous la forme d'une armature synthétique tramée. De plus, on choisira celle-ci de manière à ce qu'elle présente de bonnes qualités de résistance mécanique, d'absorption de liquide, et de perméabilité à l'eau.

Il est à noter que l'on a obtenu de bons résultats en utilisant une armature 17 à base de polypropylène et de polyamide commercialisée par exemple sous la marque "Scrinyl".

Plus précisément, cette armature est constituée par un réseau de mailles rectangulaires à base de 95 % de polypropylène et de 5 % de polyamide dont l'épaisseur est sensiblement de 0, 1 mm et le poids de 8 g/m² . Toutefois, d'autres qualités d'armatures pourraient être utilisées sans sortir du cadre de la présente invention.

En ce qui concerne les deux autres couches 2 et 3 utilisées en combinaison avec l'armature 17 propylène, de bons résultats sont obtenus en utilisant des composants similaires à ceux décrits pour le complexe de la figure 1.

En ce qui concerne la colle colorée, on utilisera une colle de type traditionnel à deux composants à base de résine époxy contenant un solvant et colorée selon la technique décrite précédemment.

La figure 4 illustre schématiquement une installation de fabrication du complexe coloré décoratif selon la

5

présente invention.

Cette installation est du même type que celle décrite en regard de la figure 1 mais est alimentée en quatre matières de base constituantes du complexe à savoir le film plastifié 2, la feuille support 3, la colle colorée 4 et l'armature intermédiaire perméable 17.

Dans cette installation, on retrouve le poste d'encollage 6, le tunnel de séchage 10 ainsi que le poste de calandrage 12.

A l'entrée de ce poste de calandrage 12 sont introduites· les différentes couches constituantes du complexe 1 respectivement superposées les unes par rapport aux autres à savoir la première couche feuille support 3, la couche intermédiaire armature 17, puis la couche formée par le film plastifié encollé et teinté 18.

Ce sandwich est ensuite introduit entre les cylindres de la calandre 12 qui permettront de les appliquer à une certaine pression sous une température prédéterminée pour réaliser l' adhésion des trois couches formant le complexe 1.

A ce sujet, la pellicule de colle 4 qui a été déposée sur le film plastifié 2, du fait de la perméabilité de l' armature intermédiaire 17, permet l'accrochage efficace des trois composants. De plus, la colle étant colorée et le film plastifié transparent, on obtient une coloration du complexe 1 vue du recto du complexe.

A titre d'exemple non limitatif, de bons résultats ont été obtenus par la mise en oeuvre suivante :

EXEMPLE No 3 : Complexe papier peint coloré orange

```
- 34,3 kg de colle composée de : 20    kg de colle époxy

                                  2    kg de poly-isocyanate

                                 10    kg de diluant

                                  1,65 kg encre fluide jaune HA37653

                                  0,450kg jaune HA35125

                                  0,200kg rouge HA35126
                                  ─────────
                                 34,300kg
```

- Papier couché brillant 1 face 90 g
- Armature polypropylène-polyamide à maille rectangulaire épaisseur 0,1 mm, poids 8 g/m²
- 20 g de colle par m² de papier
- Film polypropylène épaisseur : 12 μ
- Pression calandre : 1,5 t·
- Température calandre : 45 °C

Naturellement, d'autres mises en oeuvre de la présente invention en particulier des produits de substitution connus de l'Homme de l'Art pourraient être utilisées sans pour autant sortir du cadre de la présente invention.

Les caractéristiques de la présente invention qui viennent d'être décrites permettent d'obtenir un complexe coloré décoratif très intéressant pour une utilisation papier peint.

En effet, on obtient un complexe de résistance mécanique élevée, indéchirable, lavable, teint à volonté. De plus, l'armature tramée provoque des reflets de moirage.

En outre, la structure du complexe "sandwich" : feuille papier support - armature tramée polypropylène - film plastifié, procure d'autres avantages intéressants dans le cas du papier peint. En effet, le complexe présente un pouvoir d'absorption de l'humidité grâce à la feuille support papier et à l'armature polypropylène. De plus, au moment de la pose du papier peint sur la paroi à recouvrir, la colle enduite sue le verso du papier peint profite de la structure de l'armature intermédiaire pour autoriser un meilleur accrochage du papier peint sur la paroi.

Enfin, pour obtenir des effets décoratifs supplémentaires, il pourrait être envisagé que la face externe du film plastifié 2 soit préalablement imprimée.

Toutefois, l'application du complexe de la présente invention, bien qu'avantageuse dans le domaine du papier peint, n'est nullement limitée à celui-ci et on pourra également se servir du complexe coloré de la présente invention comme papier d'emballage, ou pour confectionner certains vêtements, banderoles ou calicots de signalisation.

D'autres mises en oeuvre de la présente invention en particulier des produits de substitution connus de l'Homme de l'Art, peuvent parfaitement être utilisées sans pour autant sortir du cadre de la présente invention.

**Revendications**

1. Complexe coloré (1), trouvant notamment son application dans le domaine de l'imprimerie pour former une feuille de papier ou similaire de couleur, composé d'au moins deux couches (2, 3), la première couche (3) formant le verso du complexe (1), étant constituée d'une feuille support, la deuxième couche (2), formant le recto du complexe, étant constituée par un film plastifié, les dites deux couches (2, 3) étant solidarisées par l'intermédiaire de colle (4) à deux composants, à base de résine époxy contenant un solvant, un durcisseur, caractérisé par le fait que la colle est colorée par adjonction d'encre soluble dans le solvant de la colle.

2. Complexe coloré selon la revendication 1, caractérisé par le fait que l'encre est soluble dans l'acétate d'isopropyle.

3. Complexe coloré selon la revendication 1, caractérisé par le fait que l'encre est soluble dans le méthyl étylcétone.

4. Complexe coloré, selon la revendication 1, caractérisé par le fait que l'encre présente des propriétés physiques similaires et/ou une viscosité analogue à celle de la colle.

5. Complexe coloré selon la revendication 2, caractérisé par le fait que l'acétate d'isopropyle est utilisé comme solvant conjointement au film de polypropylène, polyéthylène, polyester, acétate de cellulose ou PVC.

6. Complexe coloré selon la revendication 3, caractérisé par le fait que le méthyl éthylcétone est utilisé comme solvant conjointement au film de polypropylène, polyester ou PVC.

7. Complexe coloré selon la revendication 1, caractérisé par le fait que le brassage de la colle additionnée d'encre soluble dans le solvant est réalisé selon le rythme de production de l'installation de fabrication.

8. Complexe coloré décoratif (1), trouvant notamment son application dans le domaine du papier peint ou du papier d'emballage, selon la revendication 1, l'une des deux couches (2, 3) étant encollée par une enduction de colle colorée, caractérisé par le fait qu'il comporte une troisième couche (5) intermédiaire perméable disposée entre le recto (2) et le verso (3) du dit complexe (1), après la dite enduction (4) de colle colorée, cette dernière assurant l'adhésion des trois couches (2, 3, 5).

9. Complexe coloré décoratif selon la revendication 8, caractérisé par le fait que la troisième couche intermédiaire (5) se présente sous la forme d'une armature synthétique tramée présentant des qualités de résistance mécanique, d'absorption de liquide, et de perméabilité.

10. Complexe coloré décoratif selon la revendication 9, caractérisé par le fait que la troisième couche intermédiaire (5) se présente sous la forme d'une armature à base de polypropylène et de polyamide.

0248750

## FIG.1

## FIG.2

0248750

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | FR-A-2 462 999  (SCHEUH FOLIEN-UND PAPIERVERARBEITUNG KG) * Revendications 1-4; figure * | 1 | B 32 B   27/10 C 09 J    3/00 B 65 D   65/40 |
| A | ABSTRACT BULLETIN OF THE INSTITUTE OF PAPER CHEMISTRY, vol. 55, no. 2, août 1984, pages 254, no. 2396(U), Appleton, Wisconsin, US; & SU-A-1 074 933 (S.M. ZHARYI et al.) 23-02-1984 | 1 | |
| A | FR-A-1 140 465  (COMPTOIR DES TEXTILES ARTIFICIELS) * Résumé, points 1,2; page 1, colonne de droite, lignes 3-11 * | 8,9 | |
| A | FR-A-2 070 211  (ISOVOLTA) * Revendications; page 2, lignes 27-35 * | 8 | DOMAINES TECHNIQUES RECHERCHES (Int. Cl.4) |
| A | GB-A-1 020 878  (FORMICA CORP.) * Revendication 1 * | 8 | C 09 J C 08 J B 05 D D 21 H B 65 D B 32 B |
| A | EP-A-0 011 274 (COORS-CONTAINER) | | |

Le présent rapport de recherche a été établi pour toutes les revendications

| Lieu de la recherche | Date d'achèvement de la recherche | Examinateur |
|---|---|---|
| LA HAYE | 11-08-1987 | GIRARD Y.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03 82